# EUROPÄISCHE PATENTSCHRIFT

(11) **EP 0 518 893 B1**
(45) Veröffentlichungstag und Bekanntmachung des Hinweises auf die Patenterteilung: **19.01.1994**
(21) Anmeldenummer: 91904419.8
(22) Anmeldetag: 21.02.1991
(51) Int. Cl.: G01N 29/00

(54) **ULTRASCHALL-PRÜFMASCHINE MIT EINEM MEHRERE PRÜFKÖPFE UND EINE ÜBERTRAGUNGSEINRICHTUNG ZUR VERBINDUNG DER PRÜFKÖPFE MIT EINER STATIONÄREN ELEKTRONIK AUFWEISENDEN ROTOR**
ULTRASONIC TESTING MACHINE WITH A ROTOR WITH A PLURALITY OF TESTING HEADS AND A TRANSMISSION DEVICE FOR CONNECTING THE TESTING HEADS TO A STATIONARY ELECTRONIC DEVICE
MACHINE D'ESSAIS A ULTRASONS AVEC UN ROTOR COMPORTANT PLUSIEURS CAPTEURS ET UN DISPOSITIF DE TRANSFERT POUR RELIER LES CAPTEURS A UN DISPOSITIF ELECTRONIQUE FIXE

(30) Priorität: 09.03.1990 DE 9002789 U
(43) Veröffentlichungstag der Anmeldung: 23.12.1992
(73) Patentinhaber: KRAUTKRÄMER GmbH & Co., D-50354 Hürth (DE)
(72) Erfinder: PRAUSE, Reinhard, D-5205 St. Augustin (DE)
(74) Vertreter: Bauer, Wulf, Dr.
(86) Internationale Anmeldenummer: DE9100134
(87) Internationale Veröffentlichungsnummer: WO9114175

(56) Entgegenhaltungen:
- DE-A- 3 644 180
- FR-A- 2 525 781
- US-A- 4 752 895
- Patent Abstract of Japan vol. 11, No. 62 (P-551)(2509) 25 February 1987, & JP-A-61 225647

## Beschreibung

Die Erfindung bezieht sich auf eine Ultraschall-Prüfmaschine, insbesondere für die Prüfung von Rundmaterial, wie Stangen und Rohre, mit einem Rotor, in dem mehrere Prüfköpfe angeordnet sind und der eine Übertragungseinrichtung mit mehreren Kanälen zur Verbindung der Prüfköpfe mit einer stationären Ansteuer- und Auswerteelektronik aufweist.

Bei Rotationsprüfmaschinen dieser Art, wie sie aus dem Buch "J. u. H. Krautkrämer, Werkstoffprüfung mit Ultraschall, 4. Aufl., Springer-Verlag" vorbekannt sind, dreht sich beim praktischen Betrieb der Rotor, in dem die Prüfköpfe angeordnet sind, mit einer hohen Umdrehungszahl pro Zeiteinheit, beispielsweise bis zu 3000 Umdrehungen pro Minute, um das linear durch die Achse des Rotors transportierte Rohr bzw. die transportierte Stange. Auf der Rohroberfläche ergeben sich schraubenlinienförmige Prüfspuren. Die Ansteuerung der im gedrehten Rotor befindlichen Prüfköpfe erfolgt über eine Übertragungseinrichtung, die mehrere Kanäle aufweist. Bei der vorbekannten Prüfmaschine sind axial versetzt zum eigentlichen Rotor Schleifringe nebeneinander angeordnet, die mit den Prüfköpfen elektrisch verbunden sind. Ihnen sind stationäre Schleifkontakte zugeordnet, die ihrerseits mit der Ansteuer- und Auswerteelektronik in Verbindung stehen.

Bei der vorbekannten Prüfmaschine des Typs ROT-FW der Anmelderin ist eine Übertragungsvorrichtung für insgesamt zehn Prüfköpfe vorgesehen. Das zugehörige Schleifringsystem hat eine axiale Länge, die etwa der axialen Länge des Rotors entspricht. Das verwendete Schleifringsystem ist kostenintensiv und muß von Zeit zu Zeit ausgetauscht werden.

Von Ultraschall-Rotationsprüfanlagen der eingangs genannten Art wird ein möglichst großer Bereich der Abmessungen der prüfbaren Rohre und Stangen, eine hohe Prüfempfindlichkeit über den gesamten, prüfbaren Abmessungsbereich, eine Anpassung der Prüfköpfe bzw. der Prüfkopfkombinationen zur Realisierung verschiedener Prüfaufgaben und eine hohe Prüfgeschwindigkeit verlangt. Um dies zu erreichen, ist es erforderlich, verschiedene Prüfköpfe bzw. Prüfkopfkombinationen zu verwenden. So ist es beispielsweise nicht möglich, mit nur 10 Prüfköpfen bei den vorbekannten Anlagen des Typs ROT-FW der Anmelderin alle normalerweise vorkommenden US-Prüfungen durchzuführen, geschweige denn seltener verlangte Prüfungen auszuführen. Stand der Technik ist es bei Rotationsprüfmaschinen, bei Änderung der Prüfaufgabe die eingebauten Prüfköpfe auszutauschen. Dies bedeutet einen hohen Arbeits- und Zeitaufwand, zusätzlich ist eine Beschädigung der empfindlichen Prüfköpfe möglich.

Nun ist es prinzipiell möglich, eine grope Anzahl von Prüfköpfen im Rotor unterzubringen. Um diese mit der stationären Ansteuer- und Auswerteelektronik verbinden zu können, muß jedoch die Übertragungseinrichtung entsprechend viele Kanäle aufweisen. Bei einer Verdopplung der Anzahl der Prüfköpfe in der vorbekannten ROT-FW-Anlage müßte dementsprechend auch die Anzahl der Kanäle der Übertragungsvorrichtung praktisch verdoppelt werden. Dies würde jedoch die axiale Länge des Schleifringsystems verdoppeln, die Anlage würde dadurch in nachteiliger Weise deutlich länger werden, der Rotor ein entsprechend höhere Masse bekommen, insbesondere aber würden auch die Kosten für die Übertragungseinrichtung beachtlich steigen.

Hier setzt nun die Erfindung ein. Sie hat es sich zur Aufgabe gemacht, eine Ultraschall-Prüfmaschine der eingangs genannten Art dahingehend weiterzuentwickeln, daß eine schnelle Umstellung auf andere Prüfungsaufgaben möglich ist.

Diese Aufgabe wird ausgehend von der Ultraschall-Prüfmaschine der eingangs genannten Art dadurch gelöst, daß im Rotor mehr Prüfköpfe als Kanäle der Übertragungseinrichtung vorgesehen sind, daß alle vorhandenen Prüfköpfe elektrisch an einen ersten Mehrfachsteckverbinder und alle Übertragungskanäle elektrisch an einen zweiten Mehrfachsteckverbinder angeschlossen sind, und daß mindestens ein diesen beiden Mehrfachsteckverbindern entsprechender, auswechselbarer Gegensteckverbinder vorhanden ist, in dem Verbindungen von Kontakten, die den Kanälen der Übertragungseinrichtung zugeordnet sind, mit Kontakten der Anschlüsse einer Teilmenge der Prüfköpfe ausgebildet sind.

Die Erfindung schlägt somit vor, alle normalerweise erforderlichen Prüfköpfe und Prüfkopftypen in den Rotor einzubauen, um auf diese Weise ein Umrüsten von Prüfköpfen überflüssig zu machen. Alle vorhandenen Prüfköpfe sind mit dem ersten Mehrfachsteckverbinder elektrisch verbunden. Die vorhandenen Übertragungskanäle sind elektrisch am zweiten Mehrfachsteckverbinder angeschlossen. Durch den erfindungsgemäßen Gegensteckverbinder, auch Programmierstecker genannt, werden nun jeweils einige Prüfköpfe elektrisch mit den Kanälen der Übertragungseinrichtung verbunden, die restlichen Prüfköpfe bleiben ohne Verbindung. Durch verschiedene Gegensteckverbinder (mit verschiedenen elektrischen Zuordnungen) können unterschiedliche Prüfköpfe den Kanälen der Übertragungseinrichtung zugeordnet werden. Um eine Prüfungsaufgabe zu ändern, ist dann nur noch notwendig, den Gegensteckverbinder gegen einen anderen auszutauschen und die Elektronik entsprechend anzupassen. Die Gegensteckverbinder sind für die jeweiligen Prüfaufgaben markiert.

Die Erfindung ermöglicht eine deutlich raschere Umstellung einer Ultraschall-Prüfmaschine bei Änderung der Prüfaufgabe. Insbesondere muß nicht mehr mit den Prüfköpfe selbst hantiert werden, diese bleiben fest im Rotor eingebaut, die Umstellung beschränkt sich im wesentlichen auf den Austausch des Gegensteckverbinders.

Die erfindungsgemäße Steckerlösung ermöglicht eine eindeutige Zuordnung aller Übertragungskanäle zu einer gewissen Untermenge an Prüfköpfen. Im Vergleich zu Einzelsteckverbindern ist die Umstellung einer Prüfaufgabe auf eine andere fehlersicher, entsprechend auch die Zuordnung der Kanäle der Ubertragungseinrichtung zu den Aus- und Eingängen der Elektronik. Jeder Gegensteckverbinder ist vorteilhafterweise so markiert, daß durch einen einfachen Befehl die Elektronik auf die zugehörige Prüfaufgabe eingestellt werden kann. Erfindungsgemäß muß die Elektronik lediglich soviele Ansteuer- und Auswertekanäle aufweisen, wie Kanäle der Übertragungseinrichtung vorhanden sind, also entsprechend der maximalen Anzahl der an die Übertragungseinrichtung anschließbaren Prüfköpfe.

Die erfindungsgemäßen Steckverbinder sind notwendigerweise im Rotor angeordnet, da sie zwischen der Übertragungseinrichtung und den Prüfköpfen vorgesehen sein müssen. Sie unterliegen damit insbesondere den Fliehkräften, die beim Drehen des Rotor auftreten. In Weiterbildung der Erfindung wird vorgeschlagen, die Anordnung aus den Mehrfachsteckverbindern und dem Gegensteckverbinder durch eine verschraubte Abdeckplatte abzudecken und insbesondere gegen den Einflup von Fliehkräften zu schützen. Dadurch kann die Steckrichtung radial ausgerichtet sein, ohne ein Trennen der Steckverbindung durch Fliehkräfte befürchten zu müssen. Beim Umstellen einer Prüfaufgabe wird zunächst die zumindest eine Abdeckplatte abgeschraubt, anschließend wird der Gegensteckverbinder ausgetauscht und wird die Abdeckplatte wieder aufgeschraubt.

Weitere Merkmale und Vorteile der Erfindung ergeben sich aus den übrigen Ansprüchen sowie der nun folgenden Beschreibung eines nicht einschränkend zu verstehenden Ausführungsbeispiels, das unter Bezugnahme auf die Zeichnung im folgenden näher erläutert wird. In dieser Zeichnung zeigen:
- Fig. 1: ein prinzipielles Blockdiagramm zur Veranschaulichung der erfindungsgemäßen Zuordnung zwischen Prüfköpfen und Kanälen der Übertragungseinrichtung,
- Fig. 2: eine Seitenansicht eines Rotors mit nicht abgedecktem Schacht für die Mehrfachverbinder-Einrichtung,
- Fig. 3: eine Seitenansicht eines Gegensteckverbinder und
- Fig. 4: eine Darstellung der Belegung der Kontaktelemente des Verbinders nach Fig. 3.

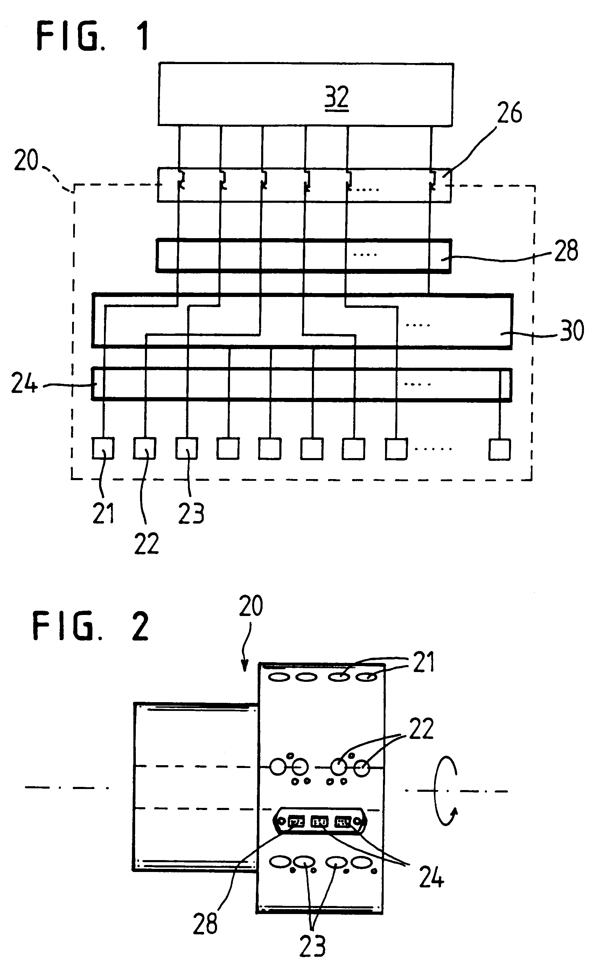

Von der Ultraschall-Prüfmaschine der eingangs genannten Art, die ansich bekannt ist, ist in den Figuren jeweils nur ein Rotor 20, und dieser jeweils nur soweit es für die Erläuterung der Erfindung notwendig ist, dargestellt. In Fig. 1 ist der Rotor 20 durch ein gestrichelt gezeichnetes Rechteck angedeutet, die im Bereich dieses Rechtecks befindlichen Teile sind Teile des Rotors. In Fig. 2 ist der Rotor ohne sonstige Teile der Prüfmaschine dargestellt.

Im Rotor 20 sind insgesamt zweiundzwanzig Prüfköpfe 21 bis 23 angeordnet, es handelt sich hierbei in ansich bekannter Art um Prüfköpfe, wie sie bei den üblicherweise vorkommenden Prüfaufgaben benutzt werden, also beispielsweise Prüfköpfe für Längsfehler (bei unterschiedlicher Schallaufrichtung), für Querfehler, für die Wanddicke usw. Um welche Art Prüfkopf 21 bis 23 es sich im einzelnen handelt, ist für die Erfindung unbeachtlich. Die Prüfköpfe 21 bis 23 sind elektrisch (über Coaxialverbindungen) mit den Kontakten eines ersten Mehrfachsteckverbinders 24 elektrisch verbunden.

Im Rotor 20 ist weiterhin, und zwar im linken Teil (Fig. 2) eine Übertragungseinrichtung 26, die im hier gezeigten Ausführungsbeispiel eine Vielzahl von Schleifringen aufweist, vorgesehen. Zusammen mit den notwendigen Massekontakten werden insgesamt zehn Kanäle ausgebildet, von den insgesamt zweiundzwanzig Prüfköpfen können also jeweils (pro Prüfaufgabe) nur zehn angeschlossen werden. Die zehn Kanäle der Übertragungseinrichtung 26 sind elektrisch (wiederum über Coaxialverbindungen) mit den Kontakten eines zweiten Mehrfachsteckers 28 mehrfach elektrisch verbunden. Die Zuordnung und elektrische Verbindung zwischen den Kontakten dieser beiden Mehrfachsteckverbinder 24, 28 erfolgt nun über einen Gegensteckverbinder 30, auch Wechselsteckverbinder oder Programmierstecker genannt. Er hat einerseits Kontaktelemente für alle Kontakte des ersten Mehrfachsteckverbinders 24 (sie befinden sich in der Darstellung nach Fig. 1 auf der Unterseite des als Block dargestellten Gegensteckverbinders 30) und andererseits Kontakte, die mit den Kontakten des zweiten Mehrfachsteckverbinders 28 zusammenwirken. Durch beliebige Beschaltung der Verbindungen zwischen diesen genannten Kontaktelementen des Gegensteckverbinders 30 können aus der Menge der Prüfköpfe 21 bis 23 diejenigen herausgewählt werden, die für die jeweilige Prüfaufgabe benötigt werden. Im gezeigten Ausführungsbeispeil können maximal (und werden üblicherweise pro Prüfaufgabe) zehn der insgesamt zweiundzwanzig Prüfköpfe 21 bis 23 ausgewählt, beispielsweise vier Prüfköpfe für Längsfehler, vier Prüfköpfe für Querfehler und zwei Prüfköpfe für die Wanddicke. Durch Auswechseln des Gegensteckverbinders 30 gegen einen anderen, anders verdrahteten Gegensteckverbinder kann eine andere Untermenge der Prüfköpfe 21 bis 23 mit den Kanälen der Übertragungseinrichtung 26 verbunden werden.

Wie Fig. 1 schließlich zeigt, ist die Übertragungseinrichtung 26 mit einer Elektronik 32 verbunden, die entsprechend der Anzahl der Kanäle der Übertragungseinrichtung 26 zehn Ein- bzw. Ausgänge hat. In bekannter Weise beaufschlagt die Elektronik die Prüfköpfe mit Sendeimpulsen und erhält kurze Zeit darauf die elektrischen, von den abgestrahlten Schallwellen empfangenen Echos als Empfangssignale.

Wie Fig. 2 zeigt, sind die insgesamt zweiundzwanzig Prüfköpfe 21 bis 23 in bekannter Weise jeweils in Gruppen angeordnet, die um 90° zueinander versetzt im Rotor 20 montiert sind. Durch geeignete, ansich bekannte Einstellmittel können die Prüfköpfe 21 bis 23 justiert werden. Zwischen zwei Gruppen der Prüfköpfe befindet sich ein normalerweise durch eine Platte abgedeckter Schacht indem sich einerseits Teile des ersten Mehrfachsteckverbinders 24 und andererseits Teile des zweiten Mehrfachsteckverbinders 28 befinden. Die restlichen Teile dieser beiden Steckverbinder 24, 28 befinden sich in einem Schacht, der 180° versetzt, sonst aber baugleich ausgebildet, im Rotor 20 vorgesehen ist. In der bereits beschriebenen Weise sind die Kontakte der beiden Steckverbinder 24, 28 mit den Prüfköpfe bzw. den Kanälen der Übertragungseinrichtung 26 verbunden, letztere befindet sich (nicht näher dargestellt, da bekannt) im linken, im Durchmesser kleineren Teil des Rotors 20. Die Fig. 2 soll auch belegen, daß für die Übertragungseinrichtung 26 eine axiale Länge beansprucht wird, die im wesentlichen der axialen Länge des Prüfkopfteils entspricht.

Die Elemente, aus denen die Steckverbinder 24, 28 sowie der Gegensteckverbinder 30 (wie im folgenden noch erläutert wird) aufgebaut sind, sind handelsübliche Mehrfachsteckverbindungen, beispielsweise Einheiten mit vierzehn Coaxialbuchsen bzw. -steckern.

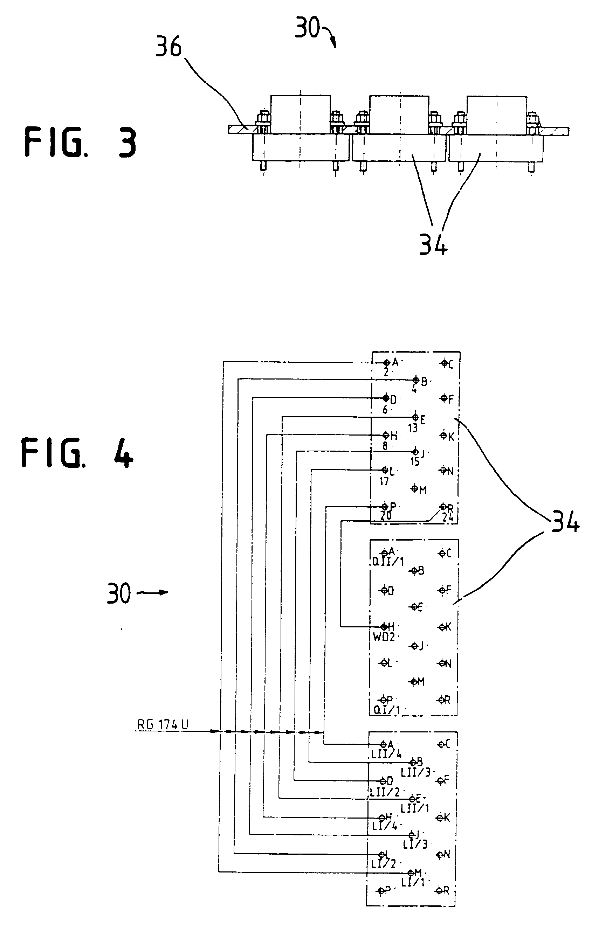

Fig. 3 zeigt den Aufbau eines Teilstücks des Gegensteckverbinders 30. Insgesamt sind zwei Teilstücke vorgesehen, die den gesamten Gegensteckverbinder 30 bilden, sie sind - wie bereits erwähnt wurde - in den zwei versetzten Schächten des Rotors 20 untergebracht und werden durch die aufgeschraubte Abdeckplatte in Kontakt mit den Kontakten der Steckverbinder 24, 28 gehalten. Die beiden Teilstücke des Gegensteckverbinders 30 sind identisch aufgebaut. Sie bestehen jeweils aus drei handelsüblichen Mehrfachsteckern 34, die auf einer gemeinsamen Platte 36 befestigt sind. Ein Beispiel für die Zuordnung ihrer Kontaktelemente, also die Verdrahtung innerhalb des gezeigten Teilstücks des Gegensteckverbinders 30, zeigt Fig. 4. Bei dieser sind die beiden unteren Mehrfachstecker 34 kontaktmäßig den Prüfköpfen 21 bis 23 zugeordnet, während der obere Mehrfachstecker 34 für die Kontaktierung des entsprechenden Teilstücks des zweiten Mehrfachsteckers 28 zuständig ist.

## Patentansprüche

1. Ultraschall-Prüfmaschine, insbesondere für Rundmaterial, wie Stangen und Rohre, mit einem Rotor (20), in dem mehrere Prüfköpfe (21 bis 23) angeordnet sind und der eine Übertragungseinrichtung (26) mit mehreren Kanälen zur Verbindung der Prüfköpfe (21 bis 23) mit einer stationären Ansteuer- und Auswerteelektronik (32) aufweist, dadurch gekennzeichnet, daß im Rotor (20) mehr Prüfköpfe (21 bis 23) als Kanäle der Übertragungseinrichtung (26) vorgesehen sind, daß alle vorhandenen Prüfköpfe (21 bis 23) elektrisch an einen ersten Mehrfachsteckverbinder (24) und alle Übertragungskanäle elektrisch an einen zweiten Mehrfachsteckverbinder (28) angeschlossen sind, und daß mindestens ein diesen beiden Mehrfachsteckverbindern entsprechender, auswechselbarer Gegensteckverbinder (30) vorhanden ist, in dem Verbindungen von Kontakten, die den Kanälen der Übertragungseinrichtung (26) zugeordnet sind, mit Kontakten von Anschlüssen einer Teilmenge der Prüfköpfe (21 bis 23) ausgebildet sind.

2. Ultraschall-Prüfmaschine nach Anspruch 1, dadurch gekennzeichnet, daß die Anordnung aus den Mehrfachsteckverbindern (24, 28) und dem Gegensteckverbinder (30) durch eine verschraubte Abdeckplatte des Rotors (20) verdeckt und insbesondere gegen den Einfluß von Fliehkräften geschützt ist.

3. Ultraschall-Prüfmaschine nach Anspruch 1, dadurch gekennzeichnet, daß in zwei um 180° versetzten Schächten des Rotors (20), die durch Abdeckplatten verschließbar sind, jeweils Teilstücke der Verbinder (24, 28 und 30) angeordnet sind.

4. Ultraschall-Prüfmaschine nach Anspruch 1, dadurch gekennzeichnet, daß die Ansteuer- und Auswerteelektronik maximal soviele Kanäle aufweist, wie Kanäle in der Übertragungseinrichtung (26) vorgesehen sind.

## Claims

1. Ultrasonic test machine, especially for round stock, such as rods and tubes, which has a rotor (20), in which several probes (21 to 23) are mounted, and a transmission device (26) with several channels for connecting the probes (21 to 23) to a stationary electronic control and analysis unit (32), characterized by the fact that the rotor (20) contains more probes (21 to 23) than there are channels in the transmission device (26), that all of the probes (21 to 23) are electrically connected to a first multipoint connector (24), while all of the transmission channels are electrically connected to a second multipoint connector (28), and that there is at least one interchangeable counterconnector (30) corresponding to these two multipoint connectors, in which connections are formed between contacts that are assigned to the channels of the transmission device (26) and contacts of connections of some of the probes (21 to 23).

2. Ultrasonic test machine in accordance with Claim 1, characterized by the fact that the system comprising the multipoint connectors (24, 28) and the counterconnector (30) is covered by a screwed-on cover plate of the rotor (20) and is protected especially from the effect of centrifugal forces.

3. Ultrasonic test machine in accordance with Claim 1, characterized by the fact that portions of the connectors (24, 28, 30) are installed in two compartments of the rotor (20) that are displaced from each other by 180 degrees and that can be covered by cover plates.

4. Ultrasonic test machine in accordance with Claim 1, characterized by the fact that the electronic control and analysis unit has, as a maximum, as many channels as there are channels in the transmission device (26).

## Revendications

1. Machine d'essais à ultrasons, notamment pour des matériaux ronds tels que les barres et tuyaux, avec un rotor (20) comportant plusieurs capteurs (21 à 23) et présentant un dispositif de transfert (26) à plusieurs canaux pour relier les capteurs (21 à 23) à un dispositif électronique fixe (32), caractérisée par le fait que plusieurs capteurs (21 à 23) sont prévus en tant que canaux du dispositif de transfert (26) dans le rotor (20), que tous les capteurs disponibles (21 à 23) sont raccordés électriquement à un premier connecteur multibroche (24) et que tous les canaux de transfert sont branchés électriquement sur un deuxième connecteur multibroche (28) et qu'au moins un contre-connecteur (30) échangeable et adapté à l'un de ces deux connecteurs multibroches soit disponible dans lequel des jonctions de contacts qui sont affectés aux canaux du dispositif de transfert (26) sont formées avec les contacts des raccords d'une partie des capteurs (21 à 23).

2. Machine d'essais à ultrasons selon la revendication 1, caractérisée par le fait que la disposition des connecteurs multibroches (24, 28) et du contre-connecteur (30) est dissimulée par un recouvrement vissé du rotor (20) et notamment protégée contre l'influence des forces centrifuges.

3. Machine d'essais à ultrasons selon la revendication 1, caractérisée par le fait que des éléments des connecteurs (24, 28 et 30) sont respectivement disposés dans deux gaines décalées de 180° du rotor (20), celles-ci pouvant être fermées par des recouvrements.

4. Machine d'essais à ultrasons selon la revendication 1, caractérisée par le fait que le dispositif électronique comporte au maximum autant de canaux que le nombre de canaux prévus dans le dispositif de transfert (26).
